# EUROPEAN PATENT APPLICATION

(11) **EP 4 712 407 A1**
(43) Date of publication of application: **18.03.2026**
(21) Application number: 25192946.9
(22) Date of filing: 30.07.2025
(51) Int. Cl.: H04L 9/08

(54) **KEY MANAGEMENT DEVICE, QUANTUM CRYPTOGRAPHIC COMMUNICATION SYSTEM, INFORMATION PROCESSING DEVICE, KEY MANAGEMENT METHOD, INFORMATION PROCESSING METHOD, AND PROGRAM**

(30) Priority: 17.09.2024 JP 2024160152
(71) Applicant: Kabushiki Kaisha Toshiba, Minato-ku Tokyo 105-0023 (JP)
(72) Inventor: TANIZAWA, Yoshimichi, Tokyo (JP); SATO, Hideaki, Tokyo (JP); TAKAHASHI, Ririka, Tokyo (JP)
(74) Representative: Marks & Clerk LLP

(57) **Abstract**

According to one arrangement, a key management device is connected to a first application by a wired communication scheme or a wireless communication scheme. The key management device includes a processing unit implemented by at least one processing device and configured to transmit a response including an application key and PSK information indicating a pre-shared key (PSK) used to establish a first communication session between the first application and the key management device to the first application, when receiving a request for the application key used to encrypt or decrypt communication in the first application.

## Description

### FIELD

Arrangements described herein relate generally to a key management device, a quantum cryptographic communication system, an information processing device, a key management method, an information processing method, and a computer program product.

### BACKGROUND

A quantum key distribution (Quantum Key Distribution Network; QKD) technology is a technology by which a key for encrypted data communication is securely shared between QKD devices connected by an optical fiber using continuously transmitted single photons. A key shared by the QKD technology is guaranteed not to be eavesdropped based on the principle of quantum mechanics.

In the related art, it is difficult to reduce the operational cost of the quantum cryptographic communication system while ensuring the security of communication for transmitting an application key used for encryption or decryption to the application.

### BRIEF DESCRIPTION OF THE DRAWINGS

Fig. 1 is a diagram illustrating an example of a device configuration of a QKD network according to an arrangement;
Fig. 2 is a diagram illustrating a flow in which an application connected to a QKDN acquires an encryption key from a KM and performs encrypted communication;
Fig. 3 is a diagram illustrating an example of a device configuration used for describing a key management method according to the arrangement;
Fig. 4 is a diagram illustrating an example of a functional configuration of a KM according to the arrangement;
Fig. 5 is a diagram illustrating an example of a functional configuration of the information processing device according to the arrangement;
   Fig. 6 is a diagram illustrating a processing example in a processing pattern of the arrangement;
Fig. 7A is a diagram illustrating an example of a Get key request in processing examples of processing patterns A1-B1-C1 and A1-B1-C2;
Fig. 7B is a diagram illustrating an example of a Get key response in processing examples of the processing patterns A1-B1-C1 and A1-B1-C2;
Fig. 8A is a diagram illustrating an example of transport_keys in processing examples of processing patterns A2-B1-C1 and A2-B1-C2;
Fig. 8B is a diagram illustrating an example of transport_keys response in the processing examples of the processing patterns A2-B1-C1 and A2-B1-C2;
Fig. 9A is a diagram illustrating an example of a Get key request in a processing example of processing patterns A3-B1-C1 and A3-B1-C2;
Fig. 9B is a diagram illustrating an example of a Get key response in the processing example of the processing patterns A3-B1-C1 and A3-B1-C2;
Fig. 10A is a diagram illustrating a first example of a Get key request in processing examples of processing patterns A4-B1-C1 and A4-B1-C2;
Fig. 10B is a diagram illustrating a first example of a Get key response in the processing examples of the processing patterns A4-B1-C1 and A4-B1-C2;
Fig. 11A is a diagram illustrating a second example of the Get key request in the processing examples of the processing patterns A4-B1-C1 and A4-B1-C2;
Fig. 11B is a diagram illustrating a second example of the Get key response in the processing examples of the processing patterns A4-B1-C1 and A4-B1-C2;
Fig. 12A is a diagram illustrating an example of a Get key request in processing examples of processing patterns A5-B1-C1 and A5-B1-C2;
Fig. 12B is a diagram illustrating an example of a Get key response in the processing examples of the processing patterns A5-B1-C1 and A5-B1-C2;
Fig. 13A is a diagram illustrating an example of a Get key request in processing examples of processing patterns A6-B1-C1 and A6-B1-C2;
Fig. 13B is a diagram illustrating an example of a Get key response in the processing examples of the processing patterns A6-B1-C1 and A6-B1-C2;
Fig. 14 is a diagram illustrating a processing example of a processing pattern B2 of the arrangement;
Fig. 15 is a diagram illustrating a processing example of a processing pattern B3 of the arrangement;
Fig. 16 is a diagram illustrating an example of a hardware configuration of a QKD device according to the arrangement; and
Fig. 17 is a diagram illustrating an example of a hardware configuration of a KM and the information processing device according to the arrangement.

### DETAILED DESCRIPTION

Hereinafter, arrangements of a key management device, a quantum cryptographic communication system, an information processing device, a key management method, an information processing method, and a computer program product are described in detail with reference to the accompanying drawings. The present disclosure is not limited to the following arrangements.

Key sharing by QKD has a limited communicable distance in principle, and only one-to-one key sharing can be used. Therefore, a QKD network (QKDN) having a configuration in which a key management device (Key Manager; KM) is introduced in addition to the QKD device, and the KM stores and manages a key and relays the key is configured. In the QKDN in which the QKD is a link, and the KM is a node, it is possible to implement encryption key sharing between any two bases.

Note that the shared encryption key is provided from the KM to an application outside the QKDN and used by the application. In addition, the QKD device and the KM may be integrally implemented by a housing such as a server device.

### Configuration Example of QKDN

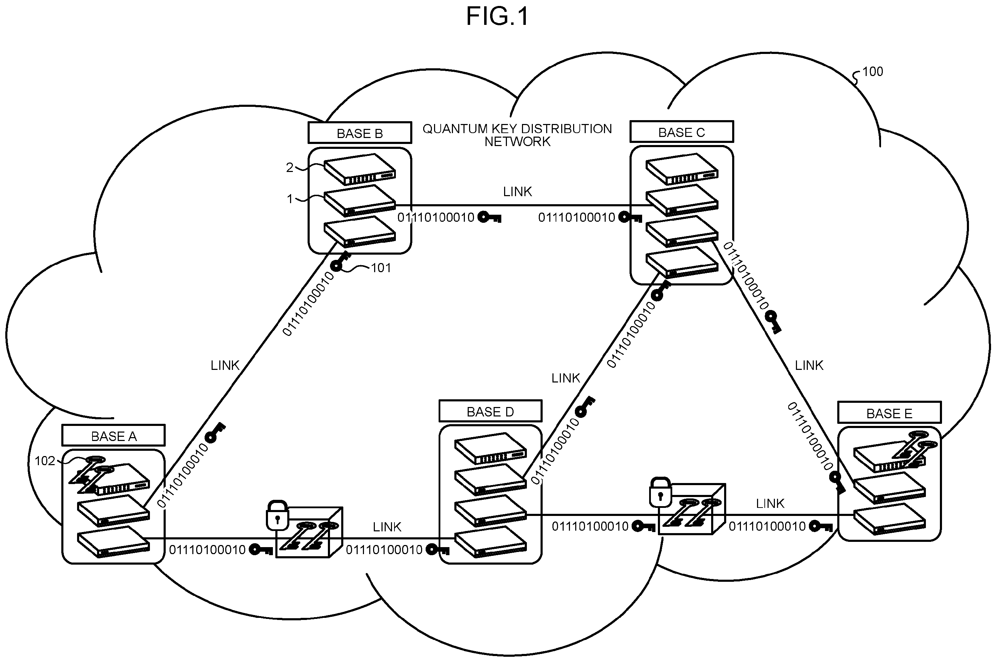

Fig. 1 is a diagram illustrating an example of a device configuration of a QKD network 100 according to an arrangement. The QKD network 100 of the arrangement includes a plurality of QKD devices 1 and a plurality of KMs 2. Fig. 1 illustrates an example of the QKD network 100 in which links are connected between five bases A to E as illustrated in Fig. 1.

The QKD device 1 executes a QKD protocol with the opposing QKD device 1 by QKD to generate an encryption key 101 (hereinafter, referred to as a "link key"). The link key is an encryption key shared between the QKD devices 1 by QKD. The link key is provided to the KM 2 connected in the base. The link key is used to encrypt and decrypt an encryption key 102 (hereinafter, referred to as an "application key") generated by the KM 2. The application key is used for encryption and decryption of communication by the application.

The KM 2 is a server device that receives a link key from at least one QKD device 1. The KM 2 stores and manages a link key and an application key and relays the application key between the KMs 2, thereby implementing encryption key sharing between the any KMs 2. Details of the key relay are described below.

The application key is a random number generated by a random number generator or the like of the KM 2. The application key is encrypted and decrypted by the link key and is transferred between the KMs 2 by an encryption relay, so that the application key is shared between any bases. The application key is provided to the application and used for encrypted communication of the application.

The application connects to the KM 2, acquires an application key from the KM 2, and performs encrypted communication with another application. The application operates in any information processing device, and the information processing device is usually installed in the same base as the KM 2 to which the application is connected. A plurality of applications may be connected to one KM 2.

The bases A to E indicate places where the QKD devices 1 and the KMs 2 are installed. The bases A to E are assumed to be sections in which physical safety is ensured, and a node installed in the base is referred to as a trusted node. The QKD device 1 and the KM 2 are mounted, for example, on a trusted node. As a result, the storage of the encryption key (the link key and the application key), the safety in the key relay, and the like are guaranteed.

Note that there are various types of key relay systems in the QKD network 100. The present arrangement is not limited to a specific key relay system. The definition of the link key and the application key is provided for convenience of description, and hereinafter a key (a key used by the application for use in the encrypted communication) provided from the KM 2 to the application may be simply referred to as an encryption key.

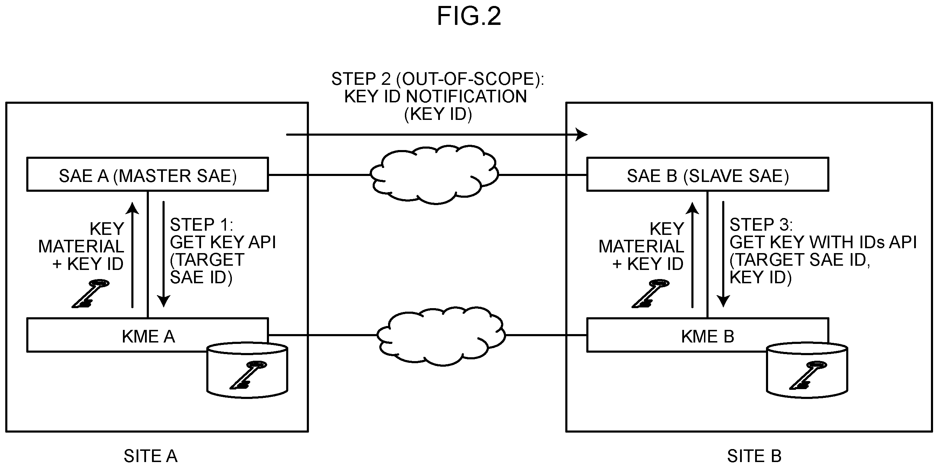

Fig. 2 is a diagram illustrating a flow in which an application connected to the QKD network 100 acquires an encryption key from the KM 2 and performs encrypted communication. Note that the notation of Fig. 2 is based on the description of ETSI GS QKD 014, "Quantum Key Distribution (QKD); Protocol and data format of REST-based key delivery API". A secure application entity (SAE) in Fig. 2 corresponds to the application of the arrangement. Also, a key management entity (KME) corresponds to the KM 2 of the arrangement.

Step 1. In the base A, an SAE A designates an ID of an SAE B of the encrypted communication destination to a KME A, calls an application programming interface (API), and requests an encryption key. Meanwhile, the KME A provides the SAE A with an encryption key and a key ID thereof.

Step 2. The SAE A notifies the SAE B of the key ID of the encryption key used for encrypted communication.

Step 3. In the base B, the SAE B calls the API by designating the key ID of the notified encryption key and the ID of the SAE A to perform the encrypted communication with the KME B and requests the encryption key. Meanwhile, the KME B provides the SAE B with the encryption key and the key ID thereof.

Through the above procedure, the SAEs A and B can acquire the same encryption key.

Note that, in the example of Fig. 2, the connection relationship between the KMEs A and B does not matter whether the KMEs are connected by a pair of QKD links or via a QKD network. In addition, the form how the KME A and B share and manage the corresponding encryption key (and the key ID thereof) (for example, a data format of the encryption key and a storage format of the database) may be in any form.

ETSI GS QKD 014, "Quantum Key Distribution (QKD); Protocol and data format of REST-based key delivery API", describes that Transport Layer Security (TLS) is used to ensure communication security when an encryption key is transferred from the KM 2 to the application in the base (Note that, in ETSI GS QKD 014, "Quantum Key Distribution (QKD); Protocol and data format of REST-based key delivery API", the key providing API is defined as Rest API).

Normally, the base is securely operated as a "trusted node", and a physical attack intrusion from the outside does not occur. In addition, network access without permission from the outside to the base is also blocked. Nevertheless, in ETSI GS QKD 014, "Quantum Key Distribution (QKD); Protocol and data format of REST-based key delivery API", communication (hereinafter, may be referred to as "key transport") between the KM 2 that transfers the encryption key using the key providing API and the application is encrypted by TLS. Encryption by TLS is meaningful as a countermeasure against eavesdropping inside a base, a risk of information leakage from inside, and the like.

However, it may be desired to avoid constructing a public key infrastructure (PKI) environment for implementing TLS from the viewpoint of cost of operating the PKI, the viewpoint of security characteristics of the PKI, and the like. In that case, it is conceivable to adopt communication security using a pre-shared key (PSK) that does not depend on the PKI.

In general, an initial value of the PSK is set at the time of product shipment or deployment, and the initial value is continuously used. However, it is not desirable to continue to use the initially set PSK throughout the operation period from the viewpoint of the information leakage risk in the base described above. A method of embedding the PSK in the product at the time of shipping the application and the KM 2 is also conceivable. However, when hardware is discarded after the operation of the product is finished, a risk of leakage of data such as the PSK from the storage of the discarded equipment is also conceivable. Therefore, embedding the PSK is desirably avoided.

From the above, it is desirable to use the PSK for the key management transport and periodically update the PSK during the operation period.

However, periodical update of the PSK of TLS used for key transport takes time and effort in operation for changing the setting. In addition, periodical change of the value of the PSK while the value is securely maintained has difficulty in setting an appropriate value, a risk of setting error, and the like, and thus human cost for performing an appropriate operation in consideration of these increases.

Assuming the use case and the operation mode as described above, in the present arrangement, a method of automatically updating the PSK of TLS in the key transport security of the key providing API to appropriately updating the PSK while reducing the operational cost is described.

Note that, although the description using TLS is continued in the present arrangement, the purpose is to update PSK. Therefore, the following arrangement can be similarly applied even to update of the PSK in a security protocol other than TLS.

### Outline of Arrangement

In the present arrangement, the update of the PSK for ensuring the communication security of the key providing API is performed in connection and integration with the protocol operation of the encryption key provision from the KM 2 to the application. More specifically, the update is performed as in (1) or (2).
(1) The request/response information of the transport key is added to the request/response message transmitted from the KM 2 to the application to provide the key, and the information of the transport key is exchanged in addition to the key provided, so that the PSK for ensuring the security of the transport is shared between the KM 2 and the application, and the transport security is re-established (updated).
(2) When a portion of the key provided from the KM 2 to the application is designated by the KM 2 or the application, the portion of the key as the PSK for ensuring the transport security is shared between the KM2 and the application, so that transport security is re-established (updated).

### Variations

There are a plurality of variations (processing patterns) in the method of performing the update of the PSK in connection and integration with the protocol operation of providing the encryption key from the KM 2 to the application.

A first point in considering variations is:
A. From which timing the PSK update is requested.

Specifically, for A., there are six processing patterns as follows.
A1. The application requests the KM 2 to update the PSK for the KM 2 at a timing of calling of an API for key acquisition.
A2. The application requests the KM 2 to update the PSK for the KM 2 at a timing independent of the calling of the API for the key acquisition.
A3. The application requests the KM 2 to update the PSK for the KM 2 at a timing of the calling of the API for the key acquisition and notifies the KM 2 of the ID of the PSK to be used.
A4. The application requests the KM 2 to update the PSK at a timing of the calling of the API for the key acquisition and notifies the KM 2 of the ID of the PSK to be used and the PSK data.
A5. The KM 2 requests the PSK update and notifies the ID of the PSK to be used at a timing when the KM 2 provides the encryption key to the application in response to the key acquisition request from the application.
A6. The KM 2 requests the PSK update and notifies the ID of the PSK to be used and the PSK data at a timing when the KM 2 provides the encryption key to the application in response to the key acquisition request from the application.

The second point is:
B. Whether the KMs 2 (in the term of ETSI GS QKD 014, "Quantum Key Distribution (QKD); Protocol and data format of REST-based key delivery API", the KME to which the Master SAE is connected and the KME to which the Slave SAE is connected are described), which are a set performing the encryption key sharing, perform the PSK update at the same timing in synchronization or independently from each other and whether the KMs 2, when performing the PSK update at the same timing in synchronization, use the common PSK.

Specifically, for B., there are three processing patterns as follows.
B1. The PSKs are independently updated on the Master side and the Slave side. (The PSKs are updated one by one.)
B2. The PSKs are updated at the same timing on the master side and the slave side in synchronization (when the same PSK is used)
B3. The PSK is updated at the same timing on the master side and the slave side in synchronization (when the different PSKs are used)

The third point is:
C. Whether to use the PSK to be used by designating an application key already shared between the KMs 2 or to generate and use a random number different from the application key.

Specifically, for C., there are two processing patterns as follows.
C1. An already shared application key is used as the PSK.
C2. A separately generated random number is used as the PSK.

From the above, it is conceivable that variations of combinations of A to C are 6 x 3 x 2 = 36.

### Common Background

Before individual variations are described, matters common to the respective variations are as follows.
· As the protocol, TLS may be used, or TLS may not be used.
· It is assumed that data is encrypted based on the pre-shared key (PSK) to perform communication. The PSK is used as a master secret/pre-master secret, and an encryption key (= session key) may be derived from the master secret/pre-master secret. Also, the PSK may be directly used as the session key.
· As the encryption scheme, for example, any encryption scheme such as one time pad (OTP) and advanced encryption standard (AES) is used. However, AES is usually used.
· Peer authentication by checking the PSK may be performed. Note that there may be a variation in which the PSK is used only for peer authentication, and the session key is derived only by the public key scheme. However, in this case, the strength of encryption is determined by a public key scheme used for key derivation.
· The update frequency of the PSK may be determined based on any criteria. For example, the PSK may be updated every time a certain time elapses based on a general standard, or the PSK may be updated every time a certain amount of communication (data amount or the number of times) is performed. In addition, since the PSK often uses a key shared and managed by the KM 2, the update frequency is controlled according to the key accumulation amount and the key remaining amount in the KM 2 or the application. For example, as the accumulation amount of the application key is larger, the update frequency of the PSK is controlled to be higher. In addition, the PSK update timing may be determined based on communication (data amount or the number of times) of the application.

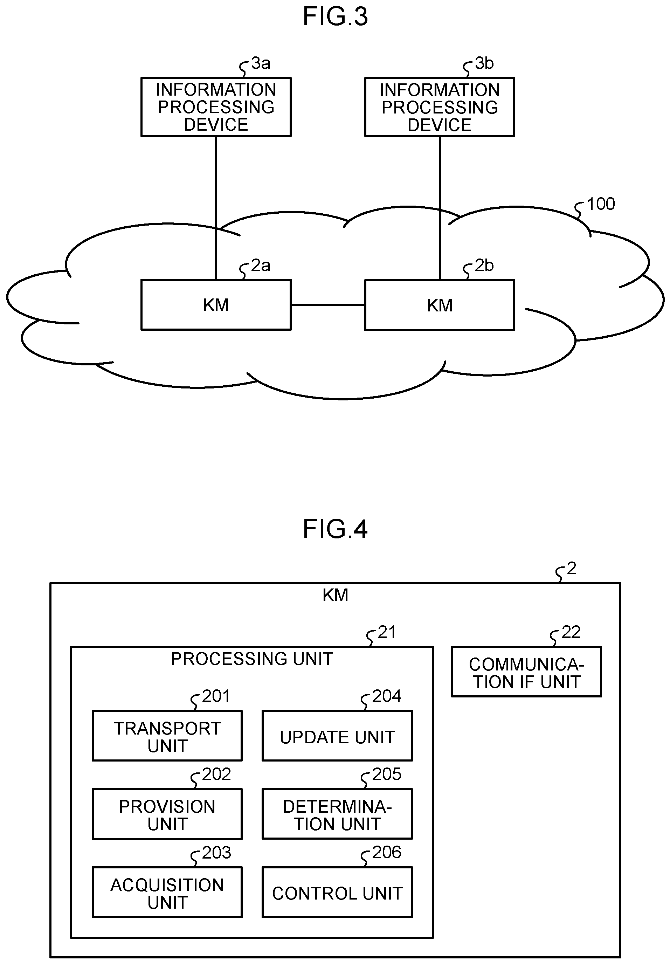

Fig. 3 is a diagram illustrating an example of a device configuration used for describing a key management method according to the arrangement. A KM 2a provides an application key to an application operating in an information processing device 3a. In addition, the KM 2a transmits an application key encrypted using a link key shared between the KM 2a and a KM 2b to the KM 2b.

The KM 2b decrypts the encrypted application key using the link key shared between the KMs 2a and 2b. The KM 2b provides an application key to an application operating in an information processing device 3b.

### Example of Functional Configuration of KM

Fig. 4 is a diagram illustrating an example of a functional configuration of the KM 2 according to the arrangement. The KM 2 according to the arrangement includes a processing unit 21 and a communication interface (IF) unit 22.

The processing unit 21 is implemented by at least one processing device and executes the process of the KM 2**.** This processing device includes, for example, a control device and an arithmetic device and is implemented by an analog or digital circuit or the like. The processing device may be a central processing unit (CPU) or may be a general-purpose processor, a microprocessor, a digital signal processor (DSP), an application specific integrated circuit (ASIC), a field-programmable gate array (FPGA), or a combination thereof.

The processing unit 21 includes a transport unit 201, a provision unit 202, an acquisition unit 203, an update unit 204, a determination unit 205, and a control unit 206.

The transport unit 201 performs communication (key transport) between the KM 2 and the application using the key providing API.

The provision unit 202 provides the application key to the application in response to the application key request.

The acquisition unit 203 acquires the link key from the QKD device 1 connected to the KM 2.

The update unit 204 updates the PSK used to establish the communication session between the application and the KM 2.

For example, when information (for example, a key ID) used for the PSK update is designated from the application, the determination unit 205 determines whether the PSK can be updated based on the designated information.

Furthermore, for example, the determination unit 205 determines a timing to update the PSK. For example, as the accumulation amount of the application key increases, the determination unit 205 increases the update frequency of the PSK. In addition, for example, when the PSK is updated with an application connected by a wired communication scheme or a wireless communication scheme, the determination unit 205 determines whether to transmit a PSK update request to the opposing KM 2.

The control unit 206 rekeys or reconnects a security protocol (for example, TLS) used as the key transport, for example, using the PSK.

The communication IF unit 22 is implemented by a communication interface that performs communication in at least one of a wireless scheme and a wired scheme. For example, the communication IF unit 22 transmits the data input from the processing unit 21 to the KM 2. Furthermore, for example, the communication IF unit 22 inputs data received from the KM 2 to a processing unit 31.

### Example of Functional Configuration of Information Processing Device

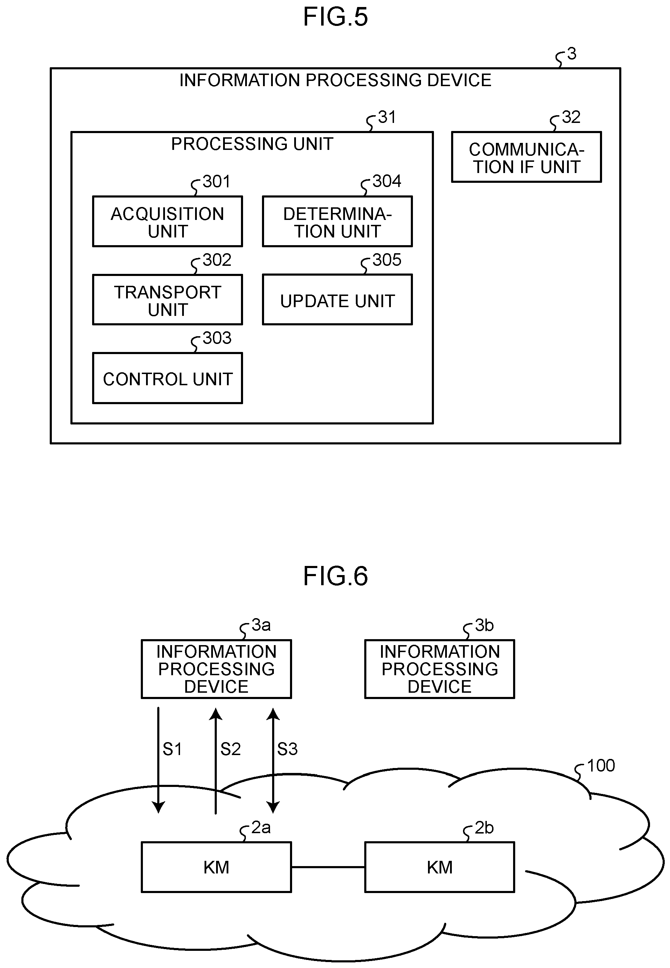

Fig. 5 is a diagram illustrating an example of a functional configuration of an information processing device 3 according to the arrangement. The information processing device 3 according to the arrangement includes a processing unit 31 and a communication IF unit 32. Note that a hardware implementation method of the processing unit 31 and the communication IF unit 32 is similar to that of the processing unit 21 and the communication IF unit 22 of the KM 2.

The processing unit 31 includes an acquisition unit 301, a transport unit 302, a control unit 303, a determination unit 304, and an update unit 305.

The acquisition unit 301 acquires an application key from the KM 2 in response to a request from the application.

The transport unit 302 performs communication (key transport) between the KM 2 and the application using the key providing API.

The control unit 303 performs control such as activation and stop of at least one application. When a plurality of applications operate in the information processing device 3, communication with the KM 2 is performed for each application. In addition, for example, the control unit 303 rekeys or reconnects a security protocol (for example, TLS) used as the key transport using the PSK.

For example, when information (for example, a key ID) used for the PSK update is designated from the KM 2, the determination unit 304 determines whether the PSK can be updated based on the designated information.

The update unit 305 updates the PSK used to establish the communication session between the application and the KM 2.

For example, the communication IF unit 32 transmits the data input from the processing unit 31 to the KM 2. Furthermore, for example, the communication IF unit 32 inputs data received from the KM 2 to the processing unit 31. Specifically, for example, the communication IF unit 32 receives an application key used for encryption or decryption of communication between applications operating in the different information processing devices 3 from the KM 2 connected to the QKD device 1 that generates a link key by the QKD.

Hereinafter, details of processing of the above-described variations (processing patterns) are described.

### Processing Patterns A1-B1-C1 and A1-B1-C2

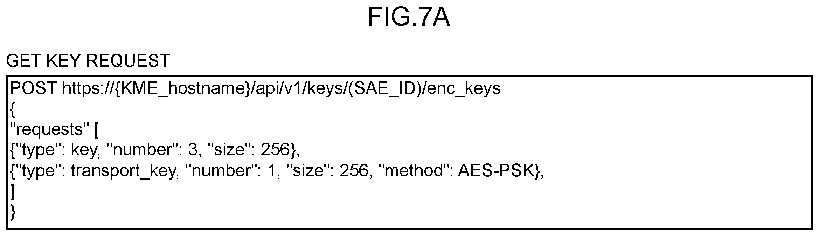

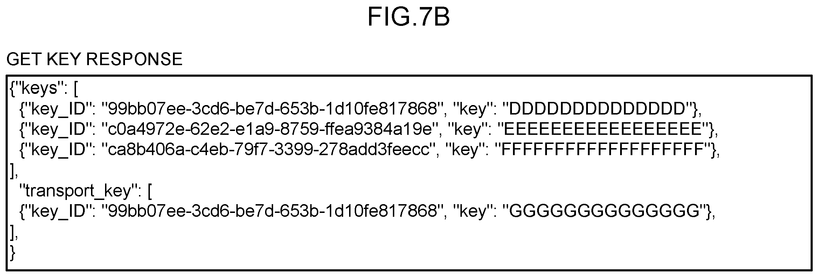

First, the processing patterns A1-B1-C1 and A1-B1-C2 are described. Fig. 6 is a diagram illustrating a processing example in a processing pattern of the arrangement. Fig. 7A is a diagram illustrating an example of a Get key request in the processing examples of the processing patterns A1-B1-C1 and A1-B1-C2. Fig. 7B is a diagram illustrating an example of a Get key response in the processing examples of the processing patterns A1-B1-C1 and A1-B1-C2.

First, the acquisition unit 301 of the information processing device 3a calls a key providing API (Get key request) and transmits a message requesting an application key to the KM 2 (Step S1). The acquisition unit 301 adds information requesting update of the PSK (also referred to as a transport key, because the PSK is a security key for transferring (transporting) a key between the KM 2 and the information processing device) to the Get key request message.

That is, the acquisition unit 301 requests update of the transport key (PSK) when requesting the application key. A format example of the get key request message in this case is as illustrated in Fig. 7A.

("type": key, "number": 3, "size": 256) in Fig. 7A indicates a request for an application key. In addition, in ("type": transport_key, "number": 1, "size": 256, "method": AES-PSK) of Fig. 7A, the type of the PSK, the number of PSKs, the size of PSK, and the name of a cryptographic algorithm for which PSK is used are designated.

Next, when the KM 2a receives a Get key request message from the information processing device 3a, the provision unit 202 transmits a Get key response message that is a message for providing an application key to the information processing device 3a (Step S2). Information of the PSK (key ID and key data) is also added to the Get key response message. A format example of the Get key response message in this case is as illustrated in Fig. 7B.

In the example of Fig. 7B, the ID and the key data of the PSK for security update of the key transport are described as transport_key together with the application key provided to the information processing device 3a in the JavaScript Object Notation (JSON) format.

Next, the information processing device 3a receives the above Get key response message from the KM 2a.

Then, a security protocol (for example, TLS) used as the key transport using the PSK is rekeyed or reconnected from the information processing device 3a to the KM 2a or from the KM 2a to the information processing device 3a (Step S3). When the rekey or the reconnection is performed, the PSK used in the key transport is updated.

In the case of the processing pattern C1, the update unit 204 designates any one of the application keys stored in the KM 2a as the transport_key. The application key designated in the transport_key is used for ensuring the key transport security with the application to which the application key is provided. For example, the control unit 206 re-establishes a session of TLS-PSK using the corresponding PSK.

The application key designated as the transport_key is not used (controlled not to be used) for encrypted communication between the applications operating in the information processing devices 3a and 3b.

Even in the KM 2b sharing the application key designated as the transport _key, control may be performed so as not to use the application key. However, in the processing pattern B2 described below, the same transport_key may be used as the PSK for update in order to ensure the key provision transport (PSK update) between the KM 2b and the application of the information processing device 3b.

In the case of the processing pattern C2, a random number generated by the KM 2 is used for the transport _key. However, the shape of the JSON format of the Get key response is similar to the case where the application key is used for the transport_key.

When the application key and the random number are used as the transport _key, the key ID (key_ID) may be omitted. Alternatively, the key_ID may be transformed into an appropriate format.

The application key may have different appropriate key ID formats between a case of being used as an encryption key for encrypted communication between applications and a case of being used as PSK of key transport. For example, when the application key is used as identity in the TLS_PSK protocol, the transport unit 201 may convert the key_ID of the application key and use the converted key_ID as the identity.

As described above, in the examples of Figs. 7A and 7B, the request for the application key includes specific information that specifies the number of PSKs, the size of the PSK, and the cryptographic algorithm for which the PSK is used. Further, the PSK information included in the response includes the identification information of the PSK based on the specific information and the key data indicating the PSK based on the specific information.

In addition, the key data indicating PSK is a random number different from the application key (in the case of C2), or an application key shared with another key management device (in the example of Fig. 6, the KM 2b) by encrypted transfer using a link key generated between the opposing QKD devices 1 by the QKD (in the case of C1).

Note that, although the method of exchange and PSK update between the application of the information processing device 3a and the KM 2a is described above, the PSK is updated between the application of the information processing device 3b and the KM 2b by a similar method.

### Processing Patterns A2-B1-C1 and A2-B1-C2

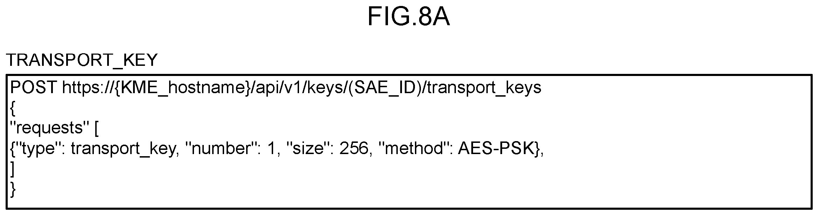

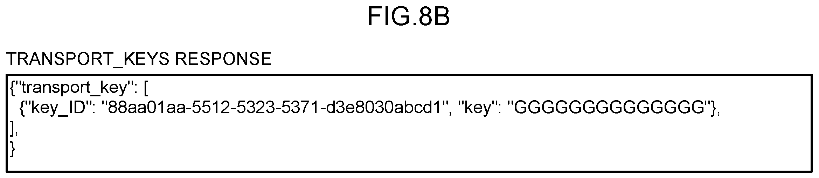

Next, the processing patterns A2-B1-C1 and A2-B1-C2 are described. A diagram illustrating a processing example of the present processing pattern is the same as that in Fig. 6. Fig. 8A is a diagram illustrating an example of the transport_keys in processing examples of the processing patterns A2-B1-C1 and A2-B1-C2. Fig. 8B is a diagram illustrating an example of transport_keys response in the processing examples of the processing patterns A2-B1-C1 and A2-B1-C2.

First, the acquisition unit 301 of the information processing device 3a calls a key providing API (transport_keys) for requesting a transport key update and transmits a message to the KM 2 (Step S1).

This message includes information requesting an update of the PSK. A format example of the transport_keys message in this case is as illustrated in Fig. 8A. A difference from the above-described [processing patterns A1-B1-C1 and A1-B1-C2] is that, as in the Get key request, a message is transmitted to (only) for updating transport_key instead of requesting the update of transport_key at the same time as the request of the key by the API.

Next, when the KM 2a receives the transport_key message from the information processing device 3a, the provision unit 202 transmits a transport_key response message, which is a message providing the PSK (key ID and key data), to the information processing device 3a (Step S2).

Information of the PSK (key ID and key data) is added to the transport_key response message. A format example of the transport_key response message in this case is as illustrated in Fig. 8B. A difference from the above-described [processing patterns A1-B1-C1 and A1-B1-C2] is that the transport_key response message in Fig. 8B does not include information (in Fig. 7B, information returned as keys) of the application key.

Next, the information processing device 3a receives the transport_key response message from the KM 2a.

Then, a security protocol (for example, TLS) used as the key transport using the PSK is rekeyed or reconnected from the information processing device 3a to the KM 2a or from the KM 2a to the information processing device 3a (Step S3). When the rekey or the reconnection is performed, the PSK used in the key transport is updated.

### Processing Patterns A3-B1-C1 and A3-B1-C2

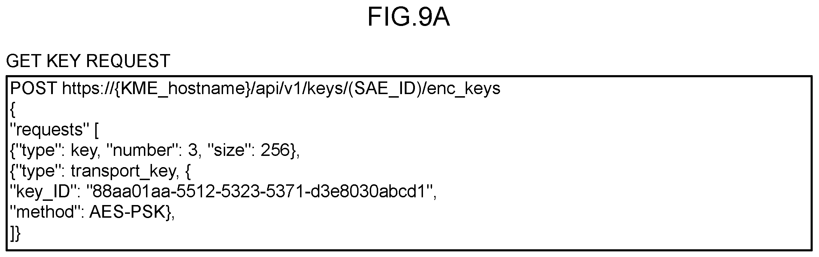

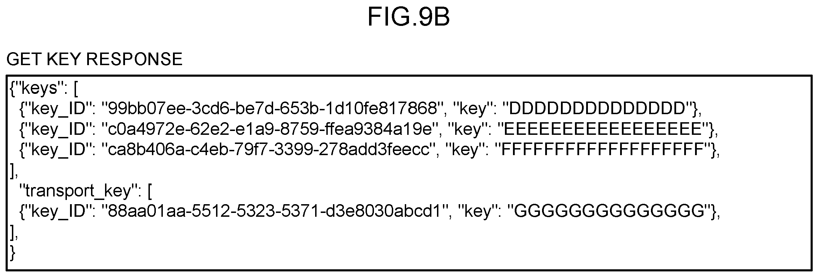

Next, the processing patterns A3-B1-C1 and A3-B1-C2 are described. A diagram illustrating a processing example of the present processing pattern is the same as that in Fig. 6. Fig. 9A is a diagram illustrating an example of a Get key request in the processing examples of the processing patterns A3-B1-C1 and A3-B1-C2. Fig. 9B is a diagram illustrating an example of a Get key response in the processing examples of the processing patterns A3-B1-C1 and A3-B1-C2.

First, the acquisition unit 301 of the information processing device 3a calls a key providing API (Get key request) and transmits a message requesting an application key to the KM 2 (Step S1). The acquisition unit 301 designates an application key used as the PSK (in the case of C1) or an ID of a random number (in the case of C2) in the Get key request message.

That is, the example of the processing pattern is usually a case where the information processing device 3a designates, as the PSK, the application key (in the case of C1) or the random number (in the case of C2) acquired from the KM 2a in advance using an encryption key providing API or the like. The rest is similar to that of the [processing patterns A1-B1-C1 and A1-B1-C2] described above.

Next, when the KM 2a receives the Get key request message from the information processing device 3a, the provision unit 202 reads the application key (in the case of C1) having the ID designated in the Get key request message or the random number (in the case of C2) from the storage device as the PSK for encrypting communication with the application of the information processing device 3a. The application key (in the case of C1) or the random number (in the case of C2) is usually the application key (in the case of C1) already shared between the KM 2a and the application of the information processing device 3a or the random number (in the case of C2).

Thereafter, the provision unit 202 transmits a Get key response message, which is a message for providing the application key, to the information processing device 3a (Step S2). Information of the PSK (key ID and key data) is also added to the Get key response message. A format example of the Get key response message in this case is as illustrated in Fig. 9B.

In the example of Fig. 9B, PSK (key ID and key data) information is also added to the Get key response message. In the JSON format, normally, an application key (in Fig. 9B, Keys) provided to the information processing device 3a and an ID and key data of the PSK for security update of key transport are described as the transport_key.

Note that there is a possibility that the provision unit 202 cannot find the application key (in the case of C1) corresponding to the key ID designated as PSK or the random number (in the case of C2). In this case, the provision unit 202 returns an error message to the information processing device 3a.

Next, the information processing device 3a receives the above Get key response message from the KM 2a.

Then, a security protocol (for example, TLS) used as the key transport using the PSK is rekeyed or reconnected from the information processing device 3a to the KM 2a or from the KM 2a to the information processing device 3a (Step S3). When the rekey or the reconnection is performed, the PSK used in the key transport is updated.

Note that if the ID of the PSK designated by the information processing device 3a is an application key already shared between the KM 2a and the information processing device 3a, the ID corresponds to C1. If the application key corresponding to the ID of the corresponding PSK is not shared with the information processing device 3a (if the corresponding application key does not exist), the application key may be generated in the KM 2a at this timing.

As described above, in the examples of Figs. 9A and 9B, the request for the application key includes identification information for identifying key data used for the PSK and specific information for specifying a cryptographic algorithm for which the PSK is used. Further, the PSK information included in the response includes the identification information of the PSK based on the specific information and the key data indicating the PSK based on the specific information.

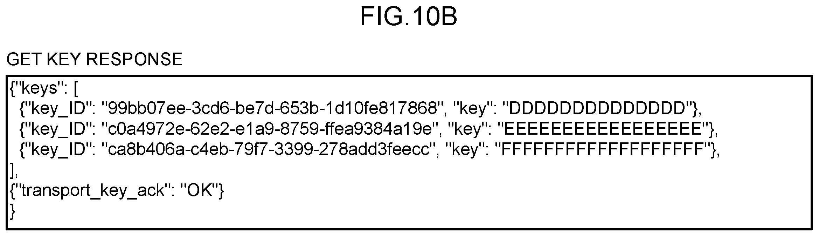

Note that the example of the response illustrated in Fig. 9B is an example, and a change may be appropriately made. For example, in the example of Fig. 9A, identification information (key_ID) of the PSK is designated by the Get key request. When the information processing device 3a and the KM 2a share the same key data, the KM 2a to which the identification information of the PSK is transmitted can specify the key data indicating the PSK only by returning information ("transport_key_ack": "OK") indicating that the update of the designated PSK is accepted as in a response illustrated in Fig. 10B described below.

For example, the PSK information included in the response may include at least one of information indicating permission or refusal of using the PSK based on the specific information included in the Get key request, identification information of the PSK based on the specific information, and key data indicating the PSK based on the specific information.

### Processing Patterns A4-B1-C1 and A4-B1-C2

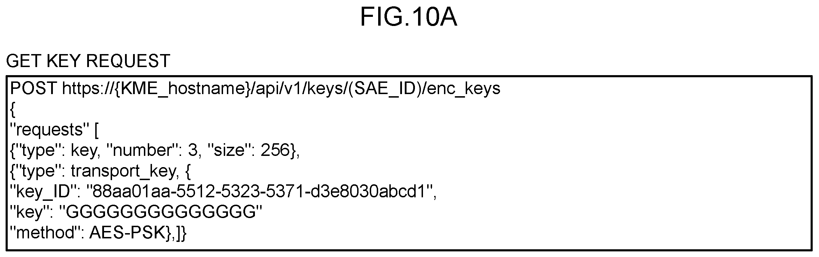

Next, the processing patterns A4-B1-C1 and A4-B1-C2 are described. A diagram illustrating a processing example of the present processing pattern is the same as that in Fig. 6. Fig. 10A is a diagram illustrating a first example of a Get key request in the processing examples of the processing patterns A4-B1-C1 and A4-B1-C2. Fig. 10B is a diagram illustrating a first example of a Get key response in the processing examples of the processing patterns A4-B1-C1 and A4-B1-C2.

First, the acquisition unit 301 of the information processing device 3a calls a key providing API (Get key request) and transmits a message requesting an application key to the KM 2 (Step S1). The acquisition unit 301 designates the application key (in the case of C1) used as the PSK or the ID of the random number (in the case of C2) and encryption key data (application key or random number) in the Get key request message.

That is, the example of the processing pattern is usually a case where the information processing device 3a designates, as the PSK, an encryption key (the application key (in the case of C1) or the random number (in the case of C2)) acquired from the KM 2a in advance using an encryption key providing API or the like by designating an ID and encryption key data. The rest is similar to that of the (processing patterns A1-B1-C1 and A1-B1-C2) described above.

Next, the KM 2a receives a Get key request message from the information processing device 3a. Then, the provision unit 202 acquires, from the Get key request message, encryption key data (the application key (in the case of C1) or the random number (in the case of C2)) of the ID designated in the Get key request message as the PSK for encrypting communication with the application of the information processing device 3a. The encryption key data is usually a random number newly designated by the information processing device 3a.

Thereafter, the provision unit 202 transmits a Get key response message, which is a message for providing the application key, to the information processing device 3a (Step S2). A format example of the Get key response message in this case is as illustrated in Fig. 10B.

In the example of Fig. 10B, information ("transport_key_ack": "OK") indicating that the designated PSK update is received is also added to the Get key response message. As illustrated in Fig. 10B, in the JSON format, information indicating that update of the transport_key is accepted is usually described together with an application key provided to the information processing device 3a.

Next, the information processing device 3a receives the above Get key response message from the KM 2a.

Then, a security protocol (for example, TLS) used as the key transport using the PSK is rekeyed or reconnected from the information processing device 3a to the KM 2a or from the KM 2a to the information processing device 3a (Step S3). When the rekey or the reconnection is performed, the PSK used in the key transport is updated.

Note that if the PSK designated by the information processing device 3a is an application key already shared between the KM 2a and the information processing device 3a, the ID corresponds to C1. When the application key corresponding to the ID of the corresponding PSK is not shared with the information processing device 3a (when the corresponding application key does not exist), the information processing device 3a generates a random number (in a case of C2).

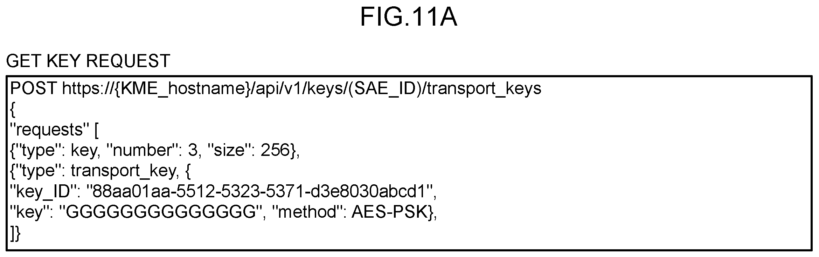

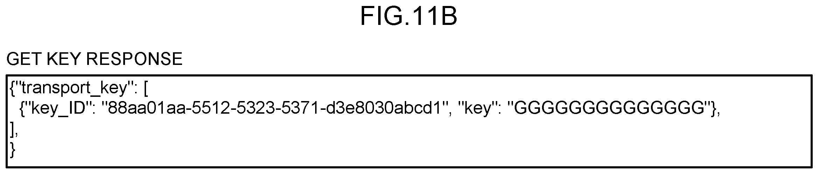

Also, Fig. 11A is a diagram illustrating a second example of a Get key request in the processing examples of the processing patterns A4-B1-C1 and A4-B1-C2. Fig. 11B is a diagram illustrating a second example of a Get key response in the processing examples of the processing patterns A4-B1-C1 and A4-B1-C2. As illustrated in Fig. 11B, the ID and the encryption key data designated as the PSK by the Get key request may be included in the Get key response.

Furthermore, a method in which the examples of Figs. 10A and 10B and Figs. 11A and 11B described above are appropriately changed may be used. For example, the request for the application key includes identification information for identifying key data used for the PSK, identification information for identifying key data used for the PSK, key data indicating the PSK, and specific information for specifying a cryptographic algorithm for which the PSK is used. Also, the PSK information included in the response may include at least one of information indicating permission or refusal of using the PSK based on the specific information, identification information of the PSK based on the specific information, and key data indicating the PSK based on the specific information.

### Processing Patterns A5-B1-C1 and A5-B1-C2

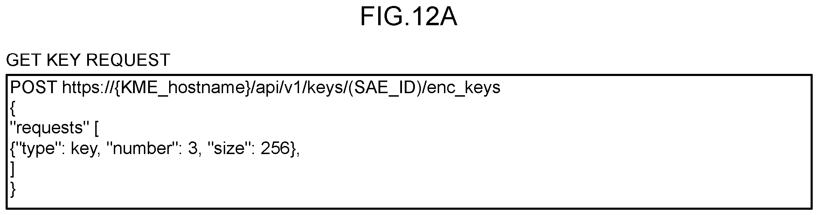

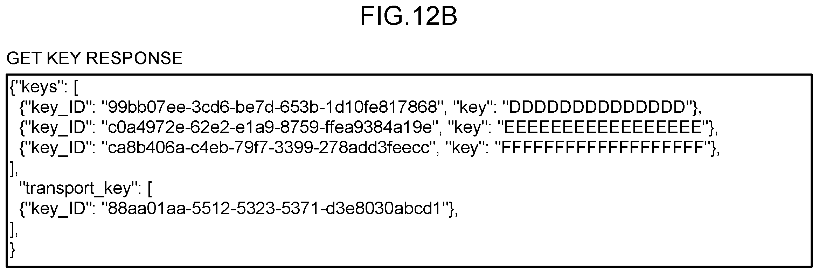

Next, the processing patterns A5-B1-C1 and A5-B1-C2 are described. A diagram illustrating a processing example of the present processing pattern is the same as that in Fig. 6. Fig. 12A is a diagram illustrating an example of a Get key request in the processing examples of the processing patterns A5-B1-C1 and A5-B1-C2. Fig. 12B is a diagram illustrating an example of a Get key response in the processing examples of the processing patterns A5-B1-C1 and A5-B1-C2.

First, the acquisition unit 301 of the information processing device 3a calls a key providing API (Get key request) and transmits a message requesting an application key to the KM 2 (Step S1).

Next, when the KM 2a receives a Get key request message from the information processing device 3a, the provision unit 202 transmits a Get key response message that is a message for providing an application key to the information processing device 3a (Step S2). A format example of the Get key response message in this case is as illustrated in Fig. 12B.

In the example of Fig. 12B, the ID information of the PSK is also added to the Get key response message. Specifically, in the JSON format, normally, together with an application key provided to the information processing device 3a, an ID of the PSK for security update of key transport is described as the transport_key.

Next, the information processing device 3a receives the above Get key response message from the KM 2a. When the encryption key (the application key (in the case of C1) or the random number (in the case of C2)) corresponding to the ID of the PSK included in the Get key response message is stored in the storage device, the update unit 305 updates the PSK with the encryption key.

Then, a security protocol (for example, TLS) used as the key transport using the PSK is rekeyed or reconnected from the information processing device 3a to the KM 2a or from the KM 2a to the information processing device 3a (Step S3). When the rekey or the reconnection is performed, the PSK used in the key transport is updated.

Note that there is a possibility that the update unit 305 cannot find the encryption key corresponding to the key ID designated by the KM 2. In this case, for example, since the update unit 305 cannot update the PSK, the PSK may not be updated. Furthermore, for example, the update unit 305 may request the KM 2 to perform the PSK update process again.

### Processing Patterns A6-B1-C1 and A6-B1-C2

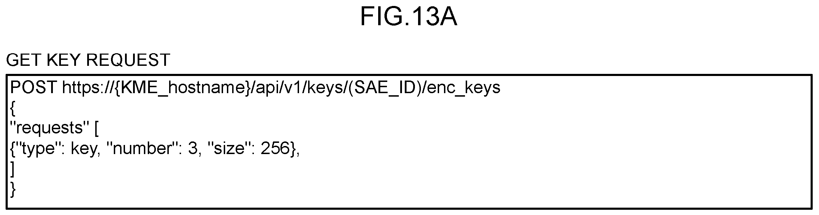

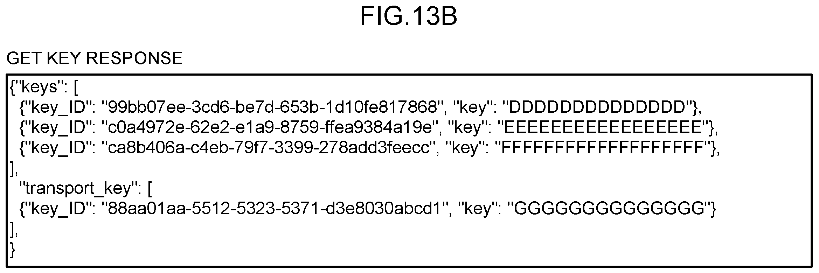

Next, the processing patterns A6-B1-C1 and A6-B1-C2 are described. A diagram illustrating a processing example of the present processing pattern is the same as that in Fig. 6. Fig. 13A is a diagram illustrating an example of a Get key request in the processing examples of the processing patterns A6-B1-C1 and A6-B1-C2. Fig. 13B is a diagram illustrating an example of a Get key response in the processing examples of the processing patterns A6-B1-C1 and A6-B1-C2.

First, the acquisition unit 301 of the information processing device 3a calls a key providing API (Get key request) and transmits a message requesting an application key to the KM 2 (Step S1).

Next, when the KM 2a receives a Get key request message from the information processing device 3a, the provision unit 202 transmits a Get key response message that is a message for providing an application key to the information processing device 3a (Step S2). A format example of the Get key response message in this case is as illustrated in Fig. 13B.

In the example of Fig. 13B, ID information of the PSK and encryption key data (the application key (in the case of C1) or the random number (in the case of C2)) are also added to the Get key response message. Specifically, in the JSON format, normally, together with an application key provided to the information processing device 3a, an ID of the PSK for security update of key transport and encryption key data are described as the transport_key.

Next, the information processing device 3a receives the above Get key response message from the KM 2a. The update unit 305 acquires the PSK (the application key (in the case of C1) or the random number (in the case of C2)) from the Get key response message and updates the PSK with the PSK.

Then, a security protocol (for example, TLS) used as the key transport using the PSK is rekeyed or reconnected from the information processing device 3a to the KM 2a or from the KM 2a to the information processing device 3a (Step S3). When the rekey or the reconnection is performed, the PSK used in the key transport is updated.

A method in which the examples of Figs. 12A and 12B and Figs. 13A and 13B described above are appropriately changed may be used. For example, the PSK information included in the response of the application request may include at least one of identification information of the PSK and key data indicating the PSK.

### Processing Pattern B2

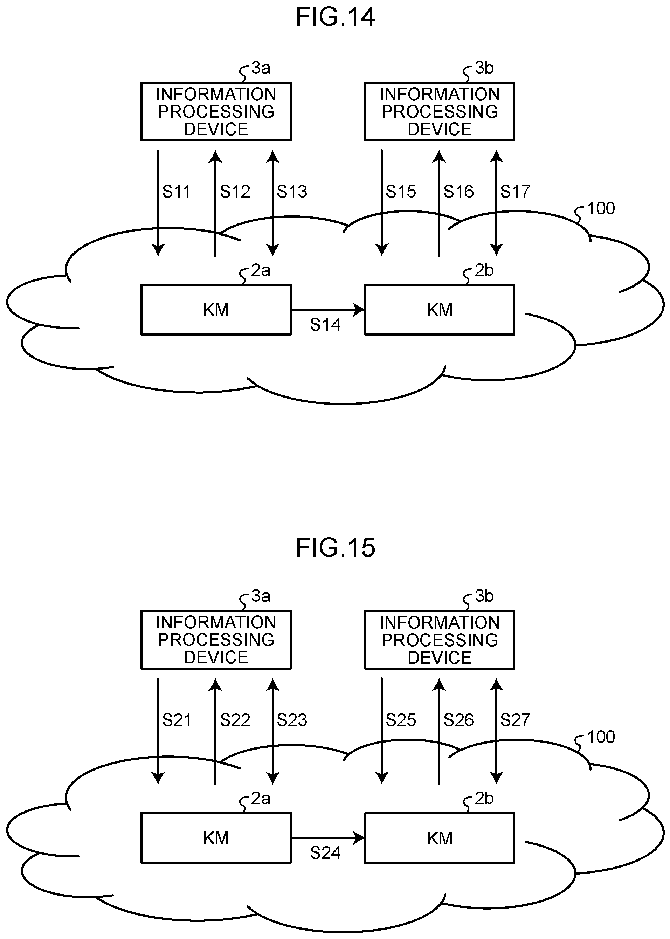

Next, the processing pattern B2 is described. Fig. 14 is a diagram illustrating a processing example of a processing pattern B2 of the arrangement. Since Steps S11 to S13 are similar to Steps S1 to S3 (Fig. 6) described above, description thereof is omitted.

In the case of the processing pattern B2, the determination unit 205 determines whether the PSK update between the KM 2a and the information processing device 3a is completed. When the update is completed, the determination unit 205 transmits a PSK update request including the key ID or the PSK data of the PSK used for the PSK update between the KM 2a and the information processing device 3a to the KM 2b (Step S14).

Note that the determination unit 205 may determine to perform the PSK update between the KM 2b and the information processing device 3b while the PSK update between the KM 2a and the information processing device 3a is being performed.

Next, upon receiving the PSK update request from the KM 2a, the determination unit 205 of the KM 2b determines to perform the PSK update between the KM 2b and the information processing device 3b in Steps S15 to S17 which are the same sequence as Steps S11 to S13.

For example, the PSK update between the KM 2b and the information processing device 3b is performed in response to the Get key response (Step S15) transmitted from the information processing device 3b after the PSK update request is received from the KM 2a. At this time, the update unit 204 of the KM 2b specifies a key used for the PSK update in the KM 2b and the information processing device 3b by using the ID of the PSK or the PSK data included in the PSK update request received from the KM 2a.

As described above, the processing unit 21 of the KM 2a transmits the PSK update request used for establishing the second communication session between the second application and the KM 2b to the KM 2b connected to the second application of the communication destination of the first application by the wired communication scheme or the wireless communication scheme.

The update request of the PSK includes identification information of the PSK used to establish the first communication session between the KM 2a and the information processing device 3a, and specific information indicating at least one of key data indicating the PSK used to establish the first communication session. The establishment of a second communication session is performed by using the specific information.

### Processing Pattern B3

Next, a processing pattern B3 is described. Fig. 15 is a diagram illustrating a processing example of the processing pattern B3 of the arrangement. Since Steps S21 to S23 and S25 to S27 are similar to Steps S11 to S13 and S15 to S17 (Fig. 14) described above, the description thereof is omitted.

In the case of the processing pattern B3, after the PSK update is performed between the KM 2a and the information processing device 3a or while the PSK update is being performed, a PSK update request indicating that the PSK update is performed between the KM 2a and the information processing device 3a is transmitted from the KM 2a to the KM 2b (Step S24).

The processing pattern B3 is different from the processing pattern B2 in that the PSK used for the PSK update between the KM 2b and the information processing device 3b is not designated by the KM 2a.

The PSK update between the KM 2b and the information processing device 3b is performed in response to the Get key response (Step S25) transmitted from the information processing device 3b after the PSK update request is received from the KM 2a.

As described above, in the KM 2 (an example of a key management device) of the arrangement connected to the first application by the wired communication scheme or the wireless communication scheme, when the processing unit 21 receives a request for an application key used to encrypt or decrypt communication in the first application, the processing unit 21 transmits a response including the application key and PSK information indicating the PSK used to establish the first communication session between the first application and the KM 2 to the first application.

Also, in the information processing device 3 according to the arrangement, the processing unit 31 transmits, to the KM 2, a request for an application key to be used for encrypting or decrypting communication in a first application connected to the KM 2 by a wired communication scheme or a wireless communication scheme and receives, from the KM 2, a response including the application key and PSK information indicating PSK to be used for establishing a first communication session between the first application and the KM 2.

According to the first arrangement, it is possible to reduce the operational cost of the quantum cryptographic communication system while ensuring the security of communication for transmitting the application key used for encryption or decryption to the application.

Finally, examples of hardware configurations of the QKD device 1, the KM 2, and the information processing device 3 according to the arrangement are described.

### Example of Hardware Configuration

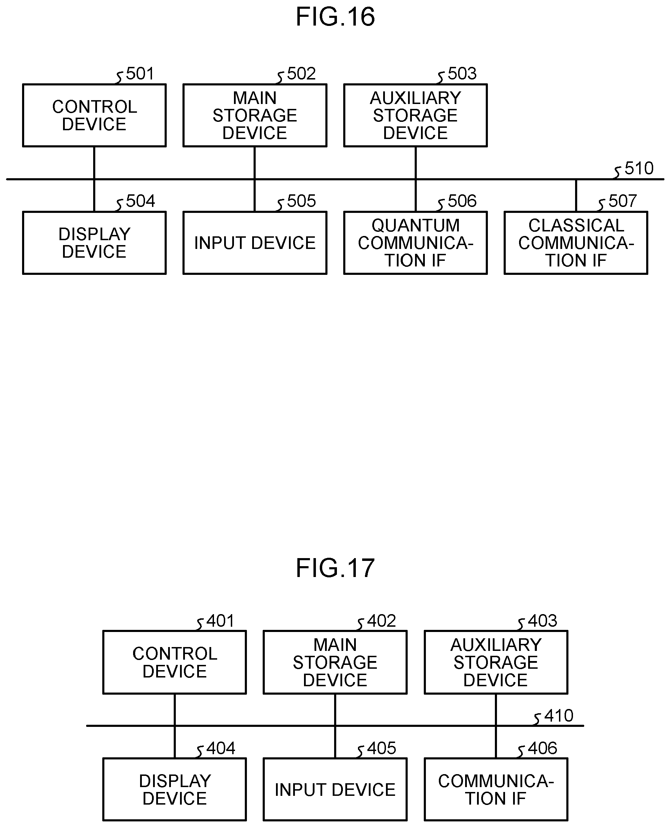

Fig. 16 is a diagram illustrating an example of a hardware configuration of the QKD device 1 according to the arrangement. The QKD device 1 of the arrangement includes a control device 501, a main storage device 502, an auxiliary storage device 503, a display device 504, an input device 505, a quantum communication IF 506, and a classical communication IF 507.

The control device 501, the main storage device 502, the auxiliary storage device 503, the display device 504, the input device 505, the quantum communication IF 506, and the classical communication IF 507 are connected via a bus 510.

The control device 501 is a processor that executes a program read from the auxiliary storage device 503 to the main storage device 502. The main storage device 502 is a memory such as a ROM and a RAM. The auxiliary storage device 503 is an HDD, a memory card, or the like.

The display device 504 displays the state and the like of the QKD device 1. The input device 505 receives an input from the user. Note that the display device 504 and the input device 505 may be implemented by a touch panel or the like having a display function and an input function. In addition, the display device 504 and the input device 505 may not be included in the QKD device 1. In this case, for example, a display function and an input function of an external terminal connected to the QKD device 1 are used.

The quantum communication IF 506 is an interface for connecting to a QKD link through which photons are transmitted. The classical communication IF 507 is an interface for connecting to a transmission path through which a control signal is transmitted to and from the opposing QKD device 1, a transmission path for communication with the KM 2, and the like.

Fig. 17 is a diagram illustrating examples of hardware configurations of the KM 2 and the information processing device 3 according to the arrangement. The KM 2 and the information processing device 3 of the arrangement include a control device 401, a main storage device 402, an auxiliary storage device 403, a display device 404, an input device 405, and a communication IF 406.

The control device 401, the main storage device 402, the auxiliary storage device 403, the display device 404, the input device 405, and the communication IF 406 are connected to each other via a bus 410.

The control device 401 is a processor that executes a program read from the auxiliary storage device 403 to the main storage device 402. The main storage device 402 is a memory such as a ROM and a RAM. The auxiliary storage device 403 is an HDD, a memory card, or the like.

The display device 404 displays states of the KM 2 and the information processing device 3 and the like. The input device 405 receives an input from the user. Note that the display device 404 and the input device 405 may be implemented by a touch panel or the like having a display function and an input function. In addition, the display device 404 and the input device 405 may not be included in the KM 2 and the information processing device 3. In this case, for example, a display function and an input function of an external terminal connected to the KM 2 and the information processing device 3 are used.

The communication IF 406 is an interface for connection to a transmission path.

The program executed by the QKD device 1, the KM 2, and the information processing device 3 of the arrangement is stored in a computer-readable storage medium such as a CD-ROM, a memory card, a CD-R, and a digital versatile disc (DVD) as a file in an installable format or an executable format and is provided as a computer program product.

Furthermore, a program to be executed by the QKD device 1, the KM 2, and the information processing device 3 may be configured to be stored on a computer connected to a network such as the Internet and be provided by being downloaded via the network.

Furthermore, for example, the program executed by the QKD device 1, the KM 2, and the information processing device 3 may be configured to be provided via a network such as the Internet without being downloaded.

In addition, the program executed by the QKD device 1, the KM 2, and the information processing device 3 may be configured to be provided by being incorporated in a ROM or the like in advance.

Note that some or all of the functions of the QKD device 1, the KM 2, and the information processing device 3 may be implemented by hardware such as an integrated circuit (IC). The IC is, for example, a processor that executes dedicated processing.

In addition, when each function is implemented by using the plurality of processors, the processors each may implement one of the functions or may implement two or more of the functions.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.

### Supplement

Note that the above arrangements can be summarized in the following technical schemes.

Technical Scheme 1. According to an arrangement, a key management device (2) is connected to a first application by a wired communication scheme or a wireless communication scheme. The key management device (2) includes a processing unit (21) implemented by at least one processing device and configured to transmit a response including an application key and PSK information indicating a pre-shared key (PSK) used to establish a first communication session between the first application and the key management device (2) to the first application, when receiving a request for the application key used to encrypt or decrypt communication in the first application.

Technical Scheme 2. In the key management device (2) according to technical scheme 1, the request for the application key includes specific information specifying a number of the PSKs, a size of the PSK, and a cryptographic algorithm for which the PSK is used. The PSK information includes identification information of the PSK based on the specific information and key data indicating the PSK based on the specific information.

Technical Scheme 3**.** In the key management device (2) according to technical scheme 1, the request for the application key includes identification information for identifying key data used for the PSK and specific information specifying a cryptographic algorithm for which the PSK is used. The PSK information includes at least one of information indicating permission or refusal of using the PSK based on the specific information, identification information of the PSK based on the specific information, and key data indicating the PSK based on the specific information.

Technical Scheme 4. In the key management device (2) according to technical scheme 3, the specific information further includes key data indicating the PSK.

Technical scheme 5. In the key management device (2) according to technical scheme 1, the PSK information includes at least one of identification information of the PSK and key data indicating the PSK.

Technical scheme 6. In the key management device (2) according to any one of technical schemes 2 to 5, the key data indicating the PSK is a random number different from the application key or an application key shared with another key management device (2) by encryption transfer using a link key generated between opposing QKD devices (1) by Quantum Key Distribution (QKD).

Technical scheme 7. In the key management device (2) according to technical scheme 1, the processing unit (21) transmits, to another key management device (2) connected to a second application as a communication destination of the first application by a wired communication scheme or a wireless communication scheme, an update request of a PSK used to establish a second communication session between the second application and the another key management device (2).

Technical scheme 8. In the key management device (2) according to technical scheme 7, the update request of the PSK includes specific information indicating at least one of identification information of the PSK used to establish the first communication session and key data indicating the PSK used to establish the first communication session, and the second communication session is established by using the specific information.

Technical scheme 9. In the key management device (2) according to any one of technical schemes 1 to 5, the application key is shared with another key management device (2) by encrypted transfer using a link key generated between opposing QKD devices (1) by QKD, and the processing unit (21) increases an update frequency of the PSK as an accumulation amount of the application key increases.

Technical scheme 10. According to an arrangement, A quantum cryptographic communication system includes the key management device (2) according to any one of technical schemes 1 to 5, and an information processing device (3) in which the first application operates.

Technical scheme 11. According to an arrangement, an information processing device (3) includes a processing unit (31) implemented by at least one processing device and configured to transmit a request for an application key used to encrypt or decrypt communication in a first application connected to a key management device (2) by a wired communication scheme or a wireless communication scheme, to the key management device (2) and receive a response including the application key and PSK information indicating a pre-shared key (PSK) used to establish a first communication session between the first application and the key management device (2) from the key management device (2).

Technical scheme 12. According to an arrangement, a key management method is implemented by a key management device (2) connected to a first application by a wired communication scheme or a wireless communication scheme. The key management method includes transmitting a response including an application key and PSK information indicating a pre-shared key (PSK) used to establish a first communication session between the first application and the key management device (2) to the first application, when receiving a request for the application key used to encrypt or decrypt communication in the first application.

Technical scheme 13. According to an arrangement, an information processing method is implemented by an information processing device (3). The information processing method includes transmitting a request for the application key used to encrypt or decrypt communication in a first application connected to a key management device (2) by a wired communication scheme or a wireless communication scheme, to the key management device (2); and receiving a response including the application key and PSK information indicating a pre-shared key (PSK) used to establish a first communication session between the first application and the key management device (2) from the key management device (2).

Technical scheme 14. According to an arrangement, a computer program product has a computer readable medium including instructions stored thereon. When executed by a computer, the instructions cause the computer to execute receiving, by a key management device (2) connected to a first application by a wired communication scheme or a wireless communication scheme, a request for an application key used to encrypt or decrypt communication in the first application; and transmitting a response including the application key and PSK information indicating a pre-shared key (PSK) used to establish a first communication session between the first application and the key management device (2) to the first application.

Technical scheme 15. According to an arrangement, a computer program product has a computer readable medium including instructions stored thereon. When executed by a computer, the instructions cause the computer to execute transmitting a request for an application key used to encrypt or decrypt communication in a first application connected to a key management device (2) by a wired communication scheme or a wireless communication scheme, to the key management device (2); and receiving a response including the application key and PSK information indicating a pre-shared key (PSK) used to establish a first communication session between the first application and the key management device (2) from the key management device (2).

## Claims

1. A key management device (2) connected to a first application by a wired communication scheme or a wireless communication scheme, the key management device (2) comprising:
a processing unit (21) implemented by at least one processing device and configured to transmit a response including an application key and PSK information indicating a pre-shared key (PSK) used to establish a first communication session between the first application and the key management device (2) to the first application, when receiving a request for the application key used to encrypt or decrypt communication in the first application.

2. The key management device (2) according to claim 1,
wherein
the request for the application key includes specific information specifying a number of the PSKs, a size of the PSK, and a cryptographic algorithm for which the PSK is used, and
the PSK information includes identification information of the PSK based on the specific information and key data indicating the PSK based on the specific information.

3. The key management device (2) according to claim 1,
wherein
the request for the application key includes identification information for identifying key data used for the PSK and specific information specifying a cryptographic algorithm for which the PSK is used, and
the PSK information includes at least one of information indicating permission or refusal of using the PSK based on the specific information, identification information of the PSK based on the specific information, and key data indicating the PSK based on the specific information.

4. The key management device (2) according to claim 3,
wherein the specific information further includes key data indicating the PSK.

5. The key management device (2) according to claim 1,
wherein the PSK information includes at least one of identification information of the PSK and key data indicating the PSK.

6. The key management device (2) according to any one of claims 2 to 5,
wherein the key data indicating the PSK is a random number different from the application key or an application key shared with another key management device (2) by encryption transfer using a link key generated between opposing QKD devices (1) by Quantum Key Distribution (QKD).

7. The key management device (2) according to claim 1,
wherein the processing unit (21) transmits, to another key management device (2) connected to a second application as a communication destination of the first application by a wired communication scheme or a wireless communication scheme, an update request of a PSK used to establish a second communication session between the second application and the another key management device (2).

8. The key management device (2) according to claim 7,
wherein the update request of the PSK includes specific information indicating at least one of identification information of the PSK used to establish the first communication session and key data indicating the PSK used to establish the first communication session, and
the second communication session is established by using the specific information.

9. The key management device (2) according to any one of claims 1 to 5,
wherein the application key is shared with another key management device (2) by encrypted transfer using a link key generated between opposing QKD devices (1) by QKD, and
the processing unit (21) increases an update frequency of the PSK as an accumulation amount of the application key increases.

10. A quantum cryptographic communication system comprising:
the key management device (2) according to any one of claims 1 to 5; and
an information processing device (3) in which the first application operates.

11. An information processing device (3) comprising:
a processing unit (31) implemented by at least one processing device and configured to transmit a request for an application key used to encrypt or decrypt communication in a first application connected to a key management device (2) by a wired communication scheme or a wireless communication scheme, to the key management device (2) and receive a response including the application key and PSK information indicating a pre-shared key (PSK) used to establish a first communication session between the first application and the key management device (2) from the key management device (2).

12. A key management method implemented by a key management device (2) connected to a first application by a wired communication scheme or a wireless communication scheme, the method comprising:
transmitting a response including an application key and PSK information indicating a pre-shared key (PSK) used to establish a first communication session between the first application and the key management device (2) to the first application, when receiving a request for the application key used to encrypt or decrypt communication in the first application.

13. An information processing method implemented by an information processing device (3), the method comprising:
transmitting a request for the application key used to encrypt or decrypt communication in a first application connected to a key management device (2) by a wired communication scheme or a wireless communication scheme, to the key management device (2); and
receiving a response including the application key and PSK information indicating a pre-shared key (PSK) used to establish a first communication session between the first application and the key management device (2) from the key management device (2).

14. A computer program product having a computer readable medium including instructions stored thereon, wherein the instructions, when executed by a computer, cause the computer to execute:
receiving, by a key management device (2) connected to a first application by a wired communication scheme or a wireless communication scheme, a request for an application key used to encrypt or decrypt communication in the first application; and
transmitting a response including the application key and PSK information indicating a pre-shared key (PSK) used to establish a first communication session between the first application and the key management device (2) to the first application.

15. A computer program product having a computer readable medium including instructions stored thereon, wherein the instructions, when executed by a computer, cause the computer to execute:
transmitting a request for an application key used to encrypt or decrypt communication in a first application connected to a key management device (2) by a wired communication scheme or a wireless communication scheme, to the key management device (2); and
receiving a response including the application key and PSK information indicating a pre-shared key (PSK) used to establish a first communication session between the first application and the key management device (2) from the key management device (2).
